Europäisches Patentamt

European Patent Office

Office européen des brevets

(19)

(11) **EP 0 874 252 B1**

(12) **FASCICULE DE BREVET EUROPEEN**

(45) Date de publication et mention
de la délivrance du brevet:
**05.10.2005 Bulletin 2005/40**

(51) Int Cl.⁷: **G02B 6/16**, G02B 6/293,
G02B 6/22

(21) Numéro de dépôt: **98400638.7**

(22) Date de dépôt: **18.03.1998**

(54) **Multiplexeur-démultiplexeur en longueur d'onde à fibres optiques**

Faseroptischer Wellenlängen-Multiplexer-Demultiplexer

Optical fibres wavelength multiplexer-demultiplexer

(84) Etats contractants désignés:
**DE FR GB**

(30) Priorité: **28.03.1997 FR 9703877**

(43) Date de publication de la demande:
**28.10.1998 Bulletin 1998/44**

(73) Titulaire: **YENISTA OPTICS SA**
**22300 Lannion (FR)**

(72) Inventeur: **Laude, Jean-Pierre**
**91690 Saint Cyr La Rivière (FR)**

(74) Mandataire: **Maillet, Alain et al**
**Cabinet le Guen & Maillet,**
**5, Place Newquay,**
**B.P. 70250**
**35802 Dinard Cedex (FR)**

(56) Documents cités:
**EP-A- 0 689 068**          **EP-A- 0 749 024**
**FR-A- 2 325 059**          **US-A- 4 622 662**
**US-A- 5 613 027**

• **REED W A ET AL: "TAILORING OPTICAL**
**CHARACTERISTICS OF DISPERSION-SHIFTED**
**LIGHTGUIDES FOR APPLICATIONS NEAR 1.55**
**M" AT & T TECHNICAL JOURNAL, vol. 65, no. 5,**
**septembre 1986, pages 105-122, XP000029694**
• **OHASHI M ET AL: "MODE FIELD DIAMETER**
**MEASUREMENT CONDITIONS IN**
**SINGLE-MODE FIBRES" ELECTRONICS**
**LETTERS, vol. 25, no. 8, 13 avril 1989, pages**
**493-495, XP000050054**

## Description

La présente invention concerne un multiplexeur-démultiplexeur en longueur d'onde à fibres optiques, susceptible d'être utilisé comme composant dans les installations de télétransmissions par fibres optiques.

On connaît déjà de tels multiplexeurs-démultiplexeurs qui ont été décrits, puis progressivement perfectionnés, en particulier dans les brevets français FR-2.543.768, FR-2.519.148, FR-2.479.981, FR-2.496.260 et dans le brevet européen EP-0.196.963.

On entend ici par multiplexeur-démultiplexeur à fibres optiques, des dispositifs dans lesquels les ondes lumineuses d'entrée et de sortie sont propagées par des fibres optiques.

L'invention concerne également les routeurs à fibres optiques dans lesquels un nombre variable de flux d'entrée, ayant chacun une longueur d'onde particulière, propagés par des fibres optiques spatialement distinctes, sont adressés sur un nombre éventuellement différent de fibres de sorties.

Dans ces différents dispositifs, un système dispersif réalise le couplage, pour une longueur d'onde donnée entre une fibre de sortie et une fibre d'entrée.

On définit ainsi un canal qui a bien entendu une certaine largeur spectrale $\Delta\lambda$.

Les multiplexeurs-démultiplexeurs ou routeurs performants doivent simultanément permettre l'exploitation d'un grand nombre de canaux, chacun de ces canaux, centrés sur une longueur d'onde $\lambda$, doit avoir une largeur spectrale $\Delta\lambda$ aussi grande que possible, tout en évitant une quelconque diaphonie.

Il y a diaphonie lorsqu'une partie de l'énergie d'un canal est partiellement mélangée à l'énergie d'un canal adjacent. Il est bien connu que la diaphonie perturbe les communications et que les dispositifs présentant un taux de diaphonie excessif sont en pratique inutilisables.

Pour simplifier la description, le dispositif de l'invention sera qualifié de multiplexeur-démultiplexeur, étant bien entendu qu'il peut s'agir d'un multiplexeur, d'un démultiplexeur ou d'un routeur.

Le but de l'invention est donc de proposer un multiplexeur-démultiplexeur qui offre des propriétés améliorées et tout en conservant une bonne séparation des canaux, améliore la largeur spectrale de chacun d'eux.

Pour atteindre ce but, on a proposé, selon l'invention, de mettre en oeuvre des fibres optiques d'entrée ou de sortie, éventuellement d'entrée et de sortie, ayant des variations d'indice qui permettent d'obtenir l'élargissement de la largeur spectrale recherchée.

A cet effet, l'invention concerne un multiplexeur-démultiplexeur en longueur d'onde à fibres optiques comportant un système dispersif en longueur d'onde, au moins une fibre d'entrée et au moins une fibre de sortie directement couplées au système dispersif, les fibres de sortie ayant un coeur et une gaine optique.

Selon l'invention, les fibres de sortie et/ou d'entrée ont un profil d'indice avec un anneau intermédiaire, situé dans la gaine optique, l'indice optique dudit anneau intermédiaire étant supérieur à l'indice optique de la gaine optique.

Selon différents modes de réalisation présentant chacun leurs avantages particuliers :

- lesdites fibres ont un profil d'indice comportant un anneau d'isolement situé entre le coeur et l'anneau intermédiaire, l'indice optique dudit anneau d'isolement étant inférieur à celui de l'anneau intermédiaire,

- la variation de l'indice du coeur desdites fibres, en fonction du rayon, est linéairement décroissante à partir du centre,

- la variation de l'indice du coeur desdites fibres, en fonction du rayon, à partir du coeur, est d'abord linéairement croissante, puis linéairement décroissante,

- la variation de l'indice du coeur desdites fibres, en fonction du rayon, à partir du coeur, est d'abord constante, égale à une valeur $n_1$, puis constante à une valeur $n_2 > n_1$, ladite variation formant ainsi un anneau,

- la variation de l'indice du coeur desdites fibres, en fonction du rayon, à partir du coeur, forme plusieurs anneaux successifs.

L'invention sera décrite en détail en référence aux dessins annexés dans lesquels :

- la Figure 1 représente le profil d'indice d'une fibre monomode utilisée dans des multiplexeurs en longueur d'onde à réseau selon l'art antérieur;

- la Figure 2 représente le profil d'indice d'un canal obtenu selon l'art antérieur, avec une fibre optique de la Figure 1;

- la Figure 3 représente la fonction de transfert d'un multiplexeur de l'art antérieur, réalisée avec des fibres optiques de la Figure 1;

- la Figure 4 représente un premier exemple de profil d'indice d'une fibre optique monomode utilisée selon l'invention;

- la Figure 5 représente le profil d'indice d'un canal obtenu selon l'invention, avec une fibre optique de la Figure 4;

- la Figure 6 représente la fonction de transfert d'un multiplexeur de l'invention, réalisée avec des fibres optiques de la Figure 4;

- la Figure 7 représente un deuxième exemple de profil d'indice d'une fibre optique monomode utilisée selon l'invention;

- la Figure 8 représente le profil d'indice d'un canal obtenu selon l'invention, avec une fibre optique de la Figure 7;

- la Figure 9 représente la fonction de transfert d'un multiplexeur de l'invention, réalisée avec des fibres optiques de la Figure 7;

- la Figure 10 représente un troisième exemple de profil d'indice d'une fibre optique monomode utilisée selon l'invention;
- la Figure 11 représente le profil d'indice d'un canal obtenu selon l'invention, avec une fibre optique de la Figure 10;
- la Figure 12 représente la fonction de transfert d'un multiplexeur de l'invention, réalisée avec des fibres optiques de la Figure 10;
- la Figure 13 est un exemple de démultiplexeur à réseau classique mettant en oeuvre l'invention;
- la Figure 14 est un exemple de multiplexeur à réseau intégré sur un substrat silicium mettant en oeuvre l'invention;
- la Figure 15 est un exemple de multiplexeur intégré mettant en oeuvre l'invention;
- la Figure 16 représente un quatrième exemple de profil d'indice d'une fibre optique monomode utilisée selon l'invention.

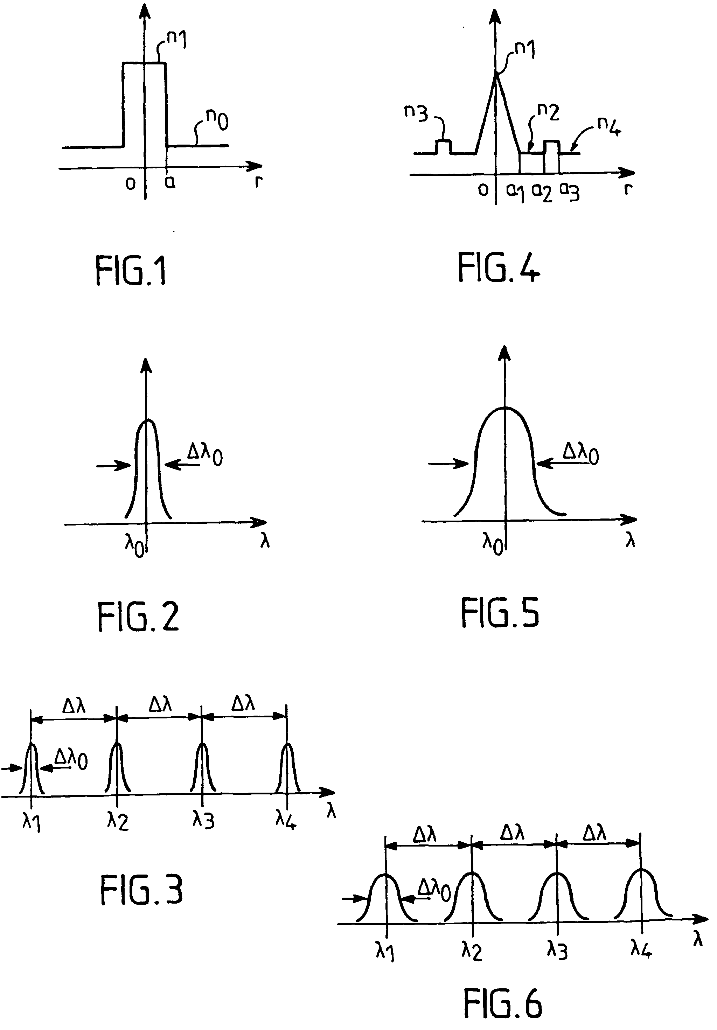

Les Figures 1 à 3 sont destinées à présenter le fonctionnement de dispositifs de transmission avec un élément dispersif de l'art antérieur.

Les fibres monomodes ayant une répartition d'indice à partir de leur centre O où le coeur de la fibre a un indice $n_1$ et la gaine optique (ou cladding) de la fibre a un indice $n_0$.

On sait que les fibres ayant un tel profil d'indice, représenté sur la Figure 1, donnent une fonction de transmission en longueur d'onde entre une fibre d'entrée et une fibre de sortie séparées par un élément dispersif, tel que représenté sur la Figure 2 ayant approximativement une forme de gaussienne centrée sur une longueur d'onde $\lambda_o$ et de largeur à mi-hauteur $\Delta\lambda_o$.

Dans le cas d'un multiplexeur ou d'un démultiplexeur, plusieurs fibres, par exemple de sortie, étant associées à une fibre d'entrée, la bande passante de l'ensemble du dispositif, représentée sur la Figure 3, est constituée d'une pluralité de bandes passantes élémentaires telles que celles représentées sur la Figure 2. La distance entre les différentes longueurs d'onde centrales $\lambda_1$, $\lambda_2$,...,$\lambda_n$ est limitée par les possibilités de rapprochement mécanique des coeurs des fibres adjacentes, cette limitation étant due à l'encombrement mécanique de la fibre composée de son coeur, de sa gaine optique (cladding) et de sa gaine mécanique.

Dans un premier exemple de réalisation de l'invention, le profil de l'indice de la fibre en fonction de son rayon r est représenté sur la Figure 4. Partant du centre O, cet indice n est linéairement décroissant à partir d'une valeur $n_1$ jusqu'à une valeur $n_2$ atteinte pour un rayon $a_1$, il a une valeur constante $n_2$ jusqu'à un rayon $a_2$, puis prend une valeur $n_3$ constante entre $a_2$ et $a_3$, et ensuite une valeur constante $n_4$, indice de la gaine optique.

Une telle fibre donne une fonction de transfert élémentaire telle que représentée sur la Figure 5, dont la largeur à mi-hauteur $\Delta\lambda_o$ est largement augmentée par rapport à celle d'une fibre traditionnelle telle que représentée sur la Figure 2. Il en découle une fonction de transfert pour un multiplexeur tel que représenté sur la Figure 6, également améliorée par rapport à celle du système antérieur représenté sur la Figure 3.

Les valeurs de ces paramètres sont avantageusement les suivantes :

$n_1 = 1,450$
$n_2 = 1,444$
$n_3 = 1,448$
$n_4 = 1,444$
$a_1 = 10,5\ \mu m$
$a_2 = 21\ \mu m$
$a_3 = 26\ \mu m$

En règle générale, dans ce mode de réalisation, les indices seront tels que $\frac{n_1 - n_4}{n_4}$, $\frac{n_2 - n_4}{n_4}$ et $\frac{n_3 - n_4}{n_4}$ soient chacun inférieur à $2.10^{-3}$.

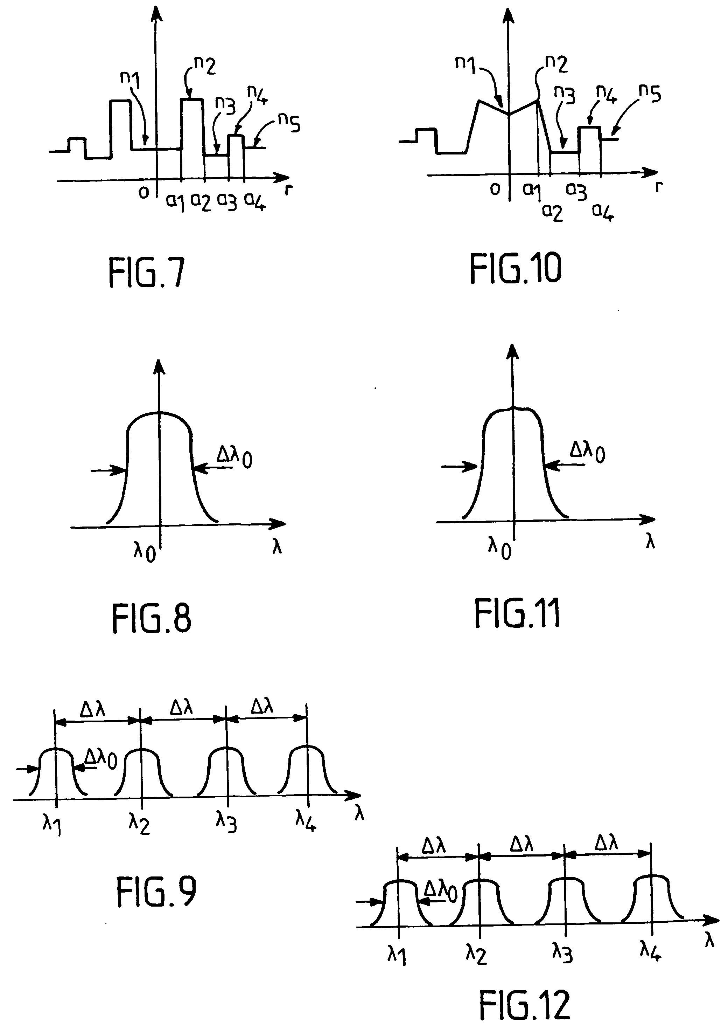

Dans un autre mode de réalisation où la répartition de l'indice de la fibre est représentée sur la Figure 7, sa valeur au centre $n_1$ est relativement faible et il a cette valeur jusqu'à une valeur $a_1$ du rayon, entre les valeurs $a_1$ et $a_2$ du rayon, l'indice est $n_2$, l'indice est de nouveau $n_1$ entre $a_2$ et $a_3$, prend une valeur $n_3$ entre $a_3$ et $a_4$.

Les valeurs de ces paramètres sont avantageusement les suivantes :

$n_1 = 1,447$
$n_2 = 1,451$
$n_3 = 1,444$
$n_4 = 1,448$
$n_5 = 1,444$
$a_1 = 12\ \mu m$
$a_2 = 14\ \mu m$
$a_3 = 22\ \mu m$
$a_4 = 27\ \mu m$

Selon un troisième mode de réalisation représenté sur la Figure 10, toujours en partant du centre, l'indice a d'abord une valeur $n_1$ au centre, progressivement linéairement croissante jusqu'à une valeur $n_2$ atteinte pour le rayon r = $a_1$, l'indice est alors égal à une valeur $n_3$, puis l'anneau intermédiaire constitué entre les rayons r = $a_2$ et r = $a_3$ définit un anneau dans lequel l'indice de la fibre est $n_4$, l'indice de la gaine optique est égal à $n_3$.

Les valeurs de ces paramètres sont avantageusement les suivantes:

$n_1 = 1,460$
$n_2 = 1,464$
$n_3 = 1,454$
$n_4 = 1,444$
$a_1 = 10\ \mu m$

$a_2$ = 13 μm

$a_3$ = 16 μm

$a_4$ = 19 μm

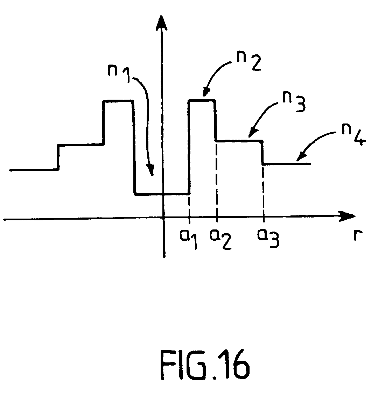

Selon un quatrième mode de réalisation représenté sur la Figure 16, la valeur $n_1$ de l'indice de la fibre au centre est relativement faible et l'indice reste égal à $n_1$ jusqu'à une valeur $a_1$ du rayon. Entre les valeurs $a_1$ et $a_2$ du rayon, l'indice vaut $n_2$, puis il est égal à $n_3$ entre $a_2$ et $a_3$ et $n_4$ pour une valeur du rayon supérieure à $a_3$. Les valeurs $n_2$, $n_3$ et $n_4$ sont en ordre décroissant.

Les différentes fibres peuvent chacune être mises en oeuvre dans différents dispositifs multiplexeurs-démultiplexeurs.

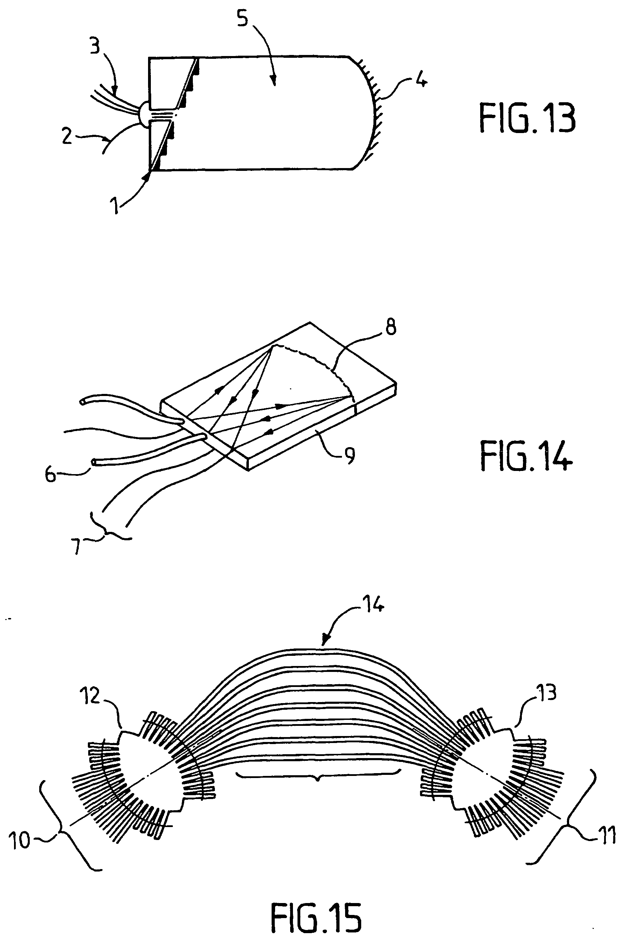

Sur la Figure 13, on a représenté un dispositif à réseau 1, une fibre d'entrée 2 alimente le dispositif en un flux lumineux multiplexé et un peigne de fibres de sortie 3 fournit des flux différenciés pour chacune des longueurs d'onde.

Les extrémités de ces fibres 3 sont placées au centre du réseau 1, lui-même approximativement au foyer d'un miroir concave 4. L'espace 5 entre le réseau 1 et le miroir 4 peut recevoir différents composants optiques permettant, en fonction des besoins, d'améliorer les propriétés du système.

Dans un tel dispositif, des profils de chacune des fibres du peigne de fibres 3 correspondant à ceux décrits plus haut et représentés sur les Figures 4, 7 et 10, donnent à ce démultiplexeur les fonctions de transfert représentées aux Figures 6, 9 et 12.

L'élément disperseur du multiplexeur-démultiplexeur de l'invention peut également être un réseau optique intégré tel que représenté sur la Figure 14.

Une fibre d'entrée 6 et un peigne de fibres de sortie 7 sont couplés au réseau intégré 8 qui est porté par un substrat silicium 9.

Ici encore, les profils d'indice des fibres représentées aux Figures 4, 7 et 10 fournissent les fonctions de transfert décrites plus haut.

L'invention est encore mise en oeuvre dans le dispositif de multiplexeur ou routeur intégré n x n tel que représenté sur la Figure 15, dans lequel des fibres d'entrée 10 alimentent un coupleur étoile d'entrée 12 qui est relié à un coupleur étoile de sortie 13, lui-même associé à un ensemble de fibres de sortie 11, par l'intermédiaire d'un réseau optique intégré 14.

Ici encore, les profils d'indice des fibres représentées aux Figures 4, 7 et 10 fournissent les fonctions de transfert décrites plus haut.

De manière générale, différents profils d'indice de fibre peuvent permettre la mise en oeuvre de l'invention. La théorie de la propagation des ondes lumineuses dans les fibres monomodes, présentée par J.P. LAUDE dans son ouvrage "Le multiplexage de longueur d'onde", Masson éditeur, 1992 (ISBN 2-225-82755-9), donne les références de plusieurs articles scientifiques de différents auteurs qui permettent pour un profil donné, de calculer le rayon équivalent de la fibre. Plus le rapport rayon équivalent sur rayon réel est élevé, meilleures sont les performances des multiplexeurs-démultiplexeurs.

## Revendications

1. Multiplexeur-démultiplexeur en longueur d'onde à fibres optiques comportant un système dispersif en longueur d'onde, au moins une fibre d'entrée et au moins une fibre de sortie directement couplées au système dispersif , lesdites fibres ayant un coeur et une gaine optique,
   **caractérisé en ce qu'**au moins l'une des fibres d'entrée et de sortie a un profil d'indice avec un anneau intermédiaire situé dans la gaine optique, l'indice optique dudit anneau intermédiaire étant supérieur à l'indice optique de la gaine optique.

2. Multiplexeur-démultiplexeur selon la revendication 1, **caractérisé en ce que** les fibres de sortie ont un profil d'indice comportant un anneau d'isolement situé entre le coeur et l'anneau intermédiaire, l'indice optique dudit anneau d'isolement étant inférieur à celui de l'anneau intermédiaire.

3. Multiplexeur-démultiplexeur selon l'une des revendications 1 ou 2, **caractérisé en ce que** la variation de l'indice du coeur des fibres de sortie, en fonction du rayon, est linéairement décroissante à partir du centre.

4. Multiplexeur-démultiplexeur selon l'une des revendications 1 ou 2, **caractérisé en ce que** la variation de l'indice du coeur des fibres de sortie, en fonction du rayon, à partir du coeur, est d'abord linéairement croissante, puis linéairement décroissante.

5. Multiplexeur-démultiplexeur selon l'une des revendications 1 ou 2, **caractérisé en ce que** la variation de l'indice du coeur des fibres de sortie, en fonction du rayon, à partir du coeur, est d'abord constante, égale à une valeur $n_1$, puis constante à une valeur $n_2 > n_1$, ladite variation formant ainsi un anneau.

6. Multiplexeur-démultiplexeur selon la revendication 5, **caractérisé en ce que** la variation de l'indice du coeur des fibres de sortie, en fonction du rayon, à partir du coeur, forme plusieurs anneaux successifs.

## Patentansprüche

1. Faseroptischer Wellenlängen-Multiplexer-Demultiplexer mit einem Wellenlängen-Dispersionssystem, zumindest einer Eingangsfaser und zumindest einer Ausgangsfaser, die direkt an das Dispersionssystem angekoppelt sind, wobei die Fasern einen Kern und eine optische Umhüllung aufweisen, **dadurch gekennzeichnet, dass** zumindest die eine der Eingangs- und Ausgangsfasern ein Indexprofil mit einem Zwischenring aufweist, der sich in der optischen Umhüllung befindet, wobei der optische Index vom Zwischenring größer als der optische Index von der optischen Umhüllung ist.

2.  Multiplexer-Demultiplexer nach Anspruch 1, **dadurch gekennzeichnet, dass** die Ausgangsfasern ein Indexprofil aufweisen, der einen Isolationsring umfasst, der sich zwischen dem Kern und dem Zwischenring befindet, wobei der optische Index vom Isolationsring kleiner als der optische Index vom Zwischenring ist.

3.  Multiplexer-Demultiplexer nach einem der Ansprüche 1 oder 2, **dadurch gekennzeichnet, dass** die Indexschwankung vom Kern der Ausgangsfasern in Abhängigkeit von Strahl ab dem Zentrum linear abnehmend ist.

4.  Multiplexer-Demultiplexer nach einem der Ansprüche 1 oder 2, **dadurch gekennzeichnet, dass** die Indexschwankung vom Kern der Ausgangsfasern in Abhängigkeit vom Strahl ab dem Kern, erst linear zunehmend und anschließend linear abnehmend ist.

5.  Multiplexer-Demultiplexer nach einem der Ansprüche 1 oder 2, **dadurch gekennzeichnet, dass** die Indexschwankung vom Kern der Ausgangsfasern in Abhängigkeit vom Strahl ab dem Kern, erst konstant gleich einem Wert $n_1$ ist, und anschließend konstant gleich einem Wert $n_2 > n_1$ ist, wobei die Schwankung somit einen Ring bildet.

6.  Multiplexer-Demultiplexer nach Anspruch 5, **dadurch gekennzeichnet, dass** die Indexschwankung vom Kern der Ausgangsfasern in Abhängigkeit vom Strahl ab dem Kern mehrere aufeinander folgende Ringe bildet.

**Claims**

1.  Optical fibre wavelength multiplexer-demultiplexer comprising a wavelength dispersing system, at least one input fibre and at least one output fibre coupled directly to the dispersing system, said fibres having a core and an optical sheath, **characterised in that** at least one of the input and output fibres has an index profile with an intermediate ring situated in the optical sheath, the optical index of said intermediate ring being greater than the optical index of the optical sheath.

2.  Multiplexer-demultiplexer according to claim 1, **characterised in that** the output fibres have an index profile comprising an insulating ring situated between the core and the intermediate ring, the optical index of said insulating ring being less than that of the intermediate ring.

3.  Multiplexer-demultiplexer according to one of claims 1 or 2, **characterised in that** the variation in the index of the core of the output fibres, as a function of the radius, is decreasing linearly from the centre.

4.  Multiplexer-demultiplexer according to one of claims 1 or 2, **characterised in that** the variation in the index of the core of the output fibres, as a function of the radius, from the core, is firstly increasing linearly then decreasing linearly.

5.  Multiplexer-demultiplexer according to one of claims 1 or 2, **characterised in that** the variation in the index of the core of the output fibres, as a function of the radius, from the core, is firstly constant, equal to a value $n_1$, then constant at a value $n_2 > n_1$, said variation thus forming a ring.

6.  Multiplexer-demultiplexer according to claim 5, **characterised in that** the variation in the index of the core of the output fibres, as a function of the radius, from the core, forms a plurality of successive rings.

FIG.1

FIG.4

FIG.2

FIG.5

FIG.3

FIG.6

FIG.7

FIG.10

FIG.8

FIG.11

FIG.9

FIG.12

FIG.13

FIG.14

FIG.15

FIG.16